## Europäisches Patentamt
## European Patent Office
## Office européen des brevets

(19)

(11) Publication number: **0 125 775**
**B1**

(12)

# EUROPEAN PATENT SPECIFICATION

(45) Date of publication of patent specification: **23.03.88**

(51) Int. Cl.⁴: **B 25 J 13/00**

(21) Application number: **84302281.5**

(22) Date of filing: **03.04.84**

(54) Controlling movement of a robot arm.

(30) Priority: **12.04.83 US 484228**

(43) Date of publication of application:
**21.11.84 Bulletin 84/47**

(45) Publication of the grant of the patent:
**23.03.88 Bulletin 88/12**

(84) Designated Contracting States:
**DE FR GB**

(56) References cited:
**EP-A-0 042 960**
**EP-A-0 045 174**
**FR-A-2 275 285**
**US-A-4 158 768**

(73) Proprietor: **POLAROID CORPORATION**
**549 Technology Square**
**Cambridge, Massachusetts 02139 (US)**

(72) Inventor: **Khusro, Mohammed M.**
**182 Jenkins Road**
**Andover Massachusetts 01810 (US)**

(74) Representative: **Skone James, Robert Edmund**
**et al**
**GILL JENNINGS & EVERY 53-64 Chancery Lane**
**London WC2A 1HN (GB)**

Courier Press, Leamington Spa, England.

## Description

The invention relates to a positioning apparatus, in general, and to apparatus for controlling the movement of a positioning device commonly referred to as an industrial robot, in particular.

Automated product assembly machines have been employed in manufacturing industries for many years. Recently, technologically sophisticated machines known as industrial robots have been employed in ever increasing numbers. Industrial robots can perform mechanical operations with high speed and accuracy in response to programmed instructions.

Common uses for industrial robots include movement of workpieces from one position to another and the performance of repetitive operations with high precision. The use of industrial robots in place of human personnel has proven very beneficial in that it has resulted in cost reductions and increased processing accuracy, and it has relieved many personnel from performing routine or potentially hazardous jobs.

A significant problem associated with industrial robots, especially those employed for product assembly purposes, is their inability to recognize when they collide or make contact with objects located in their paths of operating movement. As industrial robots may generate large forces, they can seriously damage or even destroy such contacted objects. For instance, damage often occurs where an industrial robot is programmed to place, at close tolerances, a series of identical piece-parts into openings or recesses in, for example, a series of identical housings, over an extended period of time. During this time, a misalignment often gradually results between, for example, the centre of the housing opening and the centre of the piece-parts to be inserted into the housing openings, owing to wear or fatigue of the industrial robot. Since the robots cannot detect such misalignment, damage to the piece-part, to the housing or to the robot may result as the robot attempts to place the piece-part into an opening.

A primary object of the present invention is to provide apparatus in which the possibility of such damage is reduced.

US—A—4 158 768 discloses a device for guiding a template copier for machine tools having a shaft mounted for resilient pivotal movement terminating in a pointer for following a profile. An optical sensor in the device includes a four-quadrant light-sensitive surface, the quadrant on which a light beam is incident varying with the pivotal position of the shaft: the signals from the light sensitive quadrants provide control signals for the machine tools.

The present invention consists in apparatus including a robot arm having a driving input member and a driven output member, connecting means extending between and coupling the input and output members to allow resilient relative displacement between the input and output members transverse to the direction of extension of the said connecting means, detector means including a light source and a photosensitive means so arranged in the robot arm that the point of incidence of a beam from the light source on a light-sensitive surface of the photosensitive means varies with the relative displacement of the driving and driven members, characterised in that the photosensitive means is a photodiode with a continuous light-sensitive surface and which is such that in response to light incident at a point on the surface it provides two signals which vary in a continuous manner with the deviation of the point of incidence from a reference point on the surface in two mutually perpendicular directions. These signals may be employed, for example, to terminate movement of the driven member, cause a particular force to be applied to an object by the movable member, or to facilitate the programming of a robot arm.

In its preferred form, the connecting means includes at least one elastomeric element having its ends mounted in fixed relation to respective ones of the driving and driven members, each elastomeric element having a relatively high longitudinal spring constant such that relative displacement of the members in the direction of extension of the connecting means between the input and output members is essentially precluded under load forces acting in the said direction, each elastomeric element having a comparatively low lateral spring constant to permit displacement of the portions transverse to the said direction of extension under lighter load forces. The elastomeric elements may advantageously comprise compliant pads, each including a plurality of flat discs encapsulated in an elastomeric material.

In order that the invention may be better understood, an example of apparatus embodying the invention will now be described with reference to the accompanying drawings, in which:—

Figure 1 is a perspective view of a conventional industrial robot incorporating a relative movement sensing apparatus embodying the present invention.

Figure 2 is an enlarged elevational view, partly in section, of the relative movement sensing apparatus shown in Figure 1.

Figure 3A is an exploded perspective view of the relative motion sensing apparatus shown in Figure 2.

Figure 3B is a sectional view, in elevation, of one of the spring-like compliant pads in the relative motion sensing apparatus embodying the present invention.

Figure 4A is a schematic diagram of the initial position of a portion of an axially misaligned piece-part inserting robot arm incorporating the relative motion sensing apparatus of the present invention.

Fig. 4B is a schematic diagram showing the apparatus of Fig. 4A partially inserting the piece-part into a mating piece-part receiving opening.

Fig. 5A is a schematic diagram of the initial position of a portion of a piece-part inserting robot arm holding the piece-part at an acute angle to a piece-part receiving opening.

Fig. 5B is a schematic diagram showing the apparatus of Fig. 5A partially inserting the piece-part into a mating piece-part receiving opening.

Fig. 6A is a cross-sectional view, in schematic, of the photosensitive device employed in the relative motion sensing apparatus of the present invention.

Fig. 6B is a schematic diagram of the external housing of a dual axis photodiode showing four external electrical connections and showing the X and Y coordinates of its light sensitive surface.

Fig. 7 is an information flow block diagram of the motion sensing apparatus of the present invention operating in its position sensing mode of operation.

Fig. 8 is an information flow block diagram of the motion sensing apparatus of the present invention operating in its force generating/sensing mode of operation.

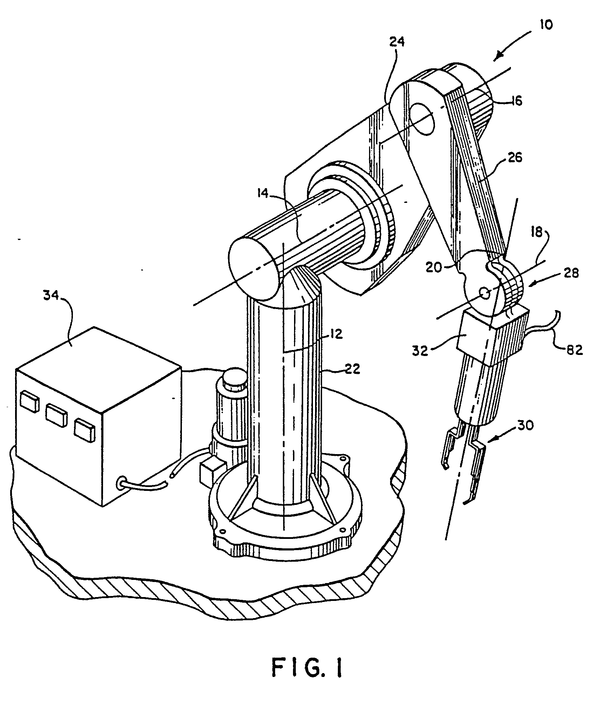

In Fig. 1 of the drawings, an industrial robot arm assembly 10 incorporating a preferred embodiment of the present invention, is depicted. The robot arm assembly 10 operates in accordance with an anthropomorphic coordinate system having six degrees of freedom with portions of the assembly being capable of at least limited rotational movement about axes 12, 14, 16, 18 and 20. The assembly 10 includes a pedestal 22 having an axis 12 about which all of the upper portions of the assembly 10 can be rotated. A lower arm 24 is mounted on pedestal 22, and may be rotated about the axis 14. An upper arm 26 which is mounted on the lower arm 24 is rotatable about the axis 16. A wrist joint 28 provides for rotation about two mutually orthogonal axes 18 and 20, the joint allowing tilting of a gripper 30 about the axis 18 with respect to upper arm 26 and pivoting about the axis 20. The gripper 30 may be actuated pneumatically. It is resiliently attached to the wrist joint 28 by relative movement sensing apparatus 32 in accordance with the present invention. The sensing apparatus 32 senses relative movement between the wrist joint 28 and the gripper 30 and generates an electrical signal representative of such relative movement. The robot assembly 10 is programmed by the so-called training method; that is the gripper 30 is manually moved to any desired gripper position whereupon the coordinates of this position are stored in a memory established in control assembly 34.

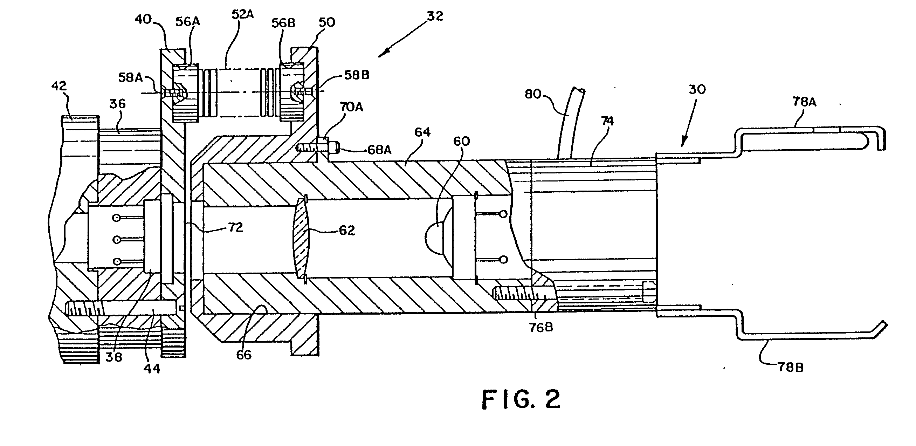

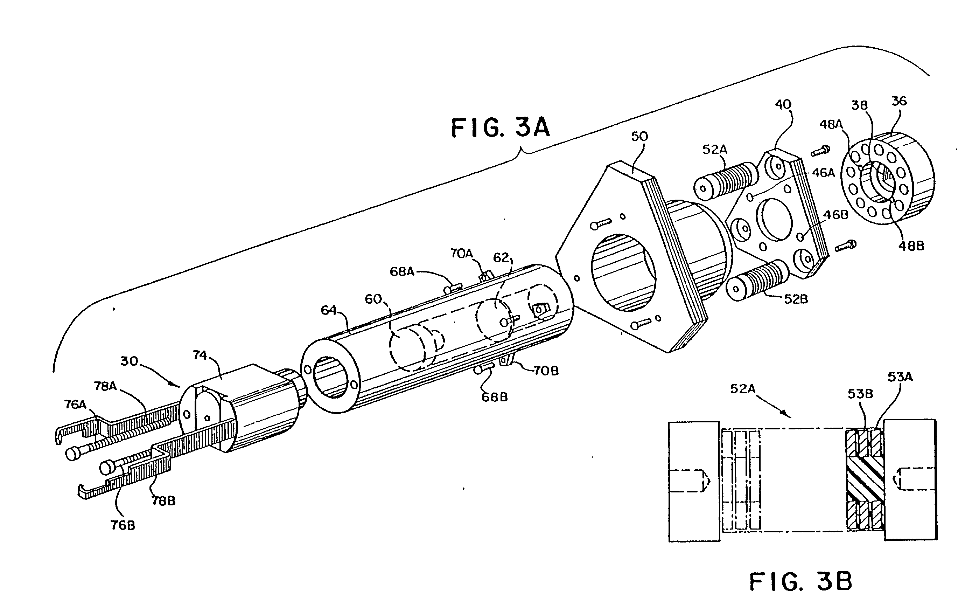

The relative motion sensing apparatus 32 in accordance with a preferred embodiment of the invention is depicted in enlarged elevation in Fig. 2; an exploded perspective view of the apparatus 32 is shown in Fig. 3A. As shown in Figs. 2 and 3A, a housing 36, a photodiode 38, and a backplate 40 are mounted on a flange portion 42 of the wrist joint 28 by mounting screws 44 (only one shown). The photodiode 38 is nested in a recess at one end of the housing 36, and the opposite end of housing 36 engages the flange portion 42. The photodiode 38 is a conventional dual-axis (X and Y) lateral effect photodiode. The backplate 40, having a pair of openings 46A and 46B for accepting mounting screws therein, engages the photodiode recess end of the housing 36, thereby positioning the photodiode 38 between housing 36 and backplate 40 when mounting screws 44, etc. extend through said openings 46A, 46B, and through corresponding openings 48A and 48B in the photodiode housing 36 and are fully threaded into cooperating threaded openings in wrist joint flange portion 42.

A front plate 50 is resiliently mounted on back plate 40 by a set of three conventional spring-like laterally resilient, compliant mounting pads (only two, 52A and 52B are shown). A sectional view of one of the pads, pad 52A, is shown in Fig. 3B. The pad 52A consists of a plurality of flat, uniformly stacked, steel disks 53A, 53B, etc. laminated together by, and encapsulated in an elastomeric material. Compliant pad 52A also is provided with a pair of mounting caps, one at each end of the pad and having threaded openings therein for mounting the pad to back plate 40 and from plate 50, respectively. The ends of the pad 52A are inserted into recesses 56A and 56B in back plate 40 and in front plate 50, respectively, and is attached to the plates by screws 58A and 58B, respectively. The other two pads are mounted to plates 40 and 50 in different plates recesses in the same manner. The pads 52A, 52B, etc., are relatively incompressible or experience only negligible deformation when axial force is applied; but they are flexible or deformable when radial forces are applied to them. The pads 52A, 52B, etc., provide multidirectional flexibility, with a predetermined spring constant in the required directions. These pads require neither lubrication nor adjustment, have low hysteresis, can take a fair amount of abuse and have a long life.

A high intensity infrared light emitting diode 60 and an optical lens 62 are mounted in fixed positions in a support housing 64. Other light sources such as lasers, laser diodes, non-infrared light emitting diodes or incandescent and fluorescent lamps may be employed as light sources in place of diode 60. The support housing 64 is positioned in a recess 66 in the front plate 50 and is fixedly attached to the plate 50 by screws 68A and 68B that pass through openings in tabs 70A and 70B, respectively, projecting from the housing 64 and into threaded openings in the front plate 50. Light from the light emitting diode 60 is focused by the conventional optical lens 62, in the shape of a relatively small circular spot, on a light sensitive surface 72 of the lateral effect photodiode 38. A portion 74 of the pneumatically actuated gripper 30 is mounted on the housing 64 by a pair of screws 76A and 76B that pass through openings in pneumatic housing 74 of the gripper 30 and into threaded openings in the housing 64. The gripper 30 is provided with a pair of fingers 78A and 78B which can move towards each other for work-piece gripping purposes when tube 80 is pressurized from a pressure source (not shown) in response to a signal from the robot arm control system 34 (Fig. 1).

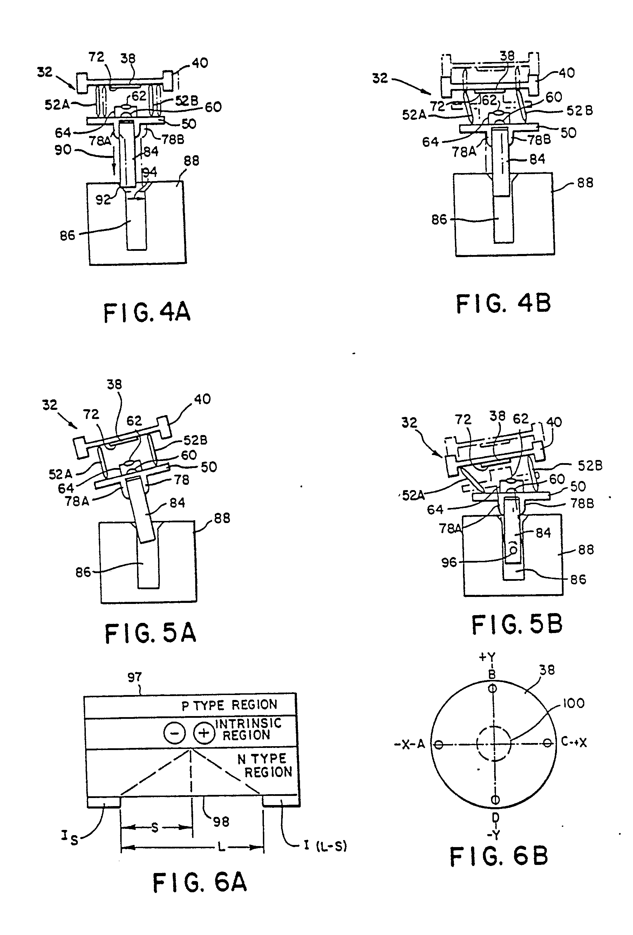

The movement sensing apparatus 32 is, in part, a compliant device that performs around the point about which rotation will occur when a moment is applied and pure translation occurs when a force is applied to the apparatus 32. Figs. 4A and 4B schematically show how lateral error is accommodated when interference is experienced by apparatus 32, and Figs. 5A and 5B schematically show how apparatus 32 mechanically operates when there is a moment-causing axial misalignment between mating parts.

In Fig. 4A, grippers 78A and 78B attached to one end of the relative motion sensing apparatus 32 are shown to attempt placing a pin 84 into an opening 86 of a receiving member 88. The pin 84 is moved in an axial direction 90, but because of lateral misalignment interference between the pin 84 and the chamfered surface 92 occurs at the entrance of opening 86. Continued axial movement of the pin 84 results in its reacting with, and sliding along, chamfered surface 92 and causes lateral movement of the pin 84, the front plate 50 and the support housing 62 in the direction of an arrow 94. In Fig. 4B, the pin 84 is shown after it has moved laterally sufficiently fully to enter the main portion of the opening 86 in the receiving member 88. As a direct consequence of this lateral movement, the compliant pads 52A, 52B, etc., distort laterally, thereby causing the light from diode 60 and passing through the lens 62 to move across the photosensitive surface 72. The effect of this light movement over the photosensitive surface of the photodiode 38 will be explained below. This spot movement over the photosensitive surface causes the photodiode 38 to generate an electrical signal representative of the movement.

In Fig. 5A, the grippers 78A and 78B are shown as attempting to place the pin 84 into the opening 86 of the receiving member 88 at an acute angle to the longitudinal axis of opening 86. While pin 84 can partially enter the opening 86, it cannot initially enter the opening 86 fully. Once the longitudinal axis of the pin 84 is aligned (parallel and/or coincident) with the longitudinal axis of opening 86 the pin 84 can, however, be moved into the opening. Alignment of the axes of the pin 84, and the opening 86, entails rotational and, sometimes, lateral movement of the front plate 50 and the support housing 64, on which light emitting diode 60 and light focusing optical lens 62 are mounted. In Fig. 5B, the pin 84 is shown as having made sufficient rotational movement about an axis 96 to be insertable into the opening 86 in the receiving member 88. The compliant pads 52A, 52B, etc., distort laterally to accommodate such rotational movement. This causes the light from the diode 60 to fall on the photosensitive surface 72 of the photodiode 38 at another position representative of the rotational movement.

Operation of dual axis lateral effect photodiode 38 will now be explained in connection with a two-terminal photodiode 97 shown in Fig. 6A. A current $I_s$ at position S, which is the position on photosensitive surface 98 of photodiode 97 where a spot of focused light from a light source falls on the surface, is given by the equation:

$$I_s = I_0(I - \frac{S}{L})$$

where:

$I_0$=photoinduced current
$I$=line current
$S$=position S
$L$=width of detector

For a dual axis photodiode, such as the diode 38 in the motion sensing apparatus of Fig. 2, the four external contacts of which are A, B, C and D, as shown in drawing Fig. 6B, the electrical signal representing the X and Y position of a light spot such as light spot 100 may be expressed as:

$$X \text{ position} = \frac{A-C}{A+C}$$

$$Y \text{ position} = \frac{B-D}{B+D}$$

The motion sensing apparatus 32 can be employed in at least two different modes of operation. In one mode, changes in the relative position between the robot hand and the robot arm body are monitored for the purpose of interrupting or terminating movement of the robot arm in cases of interference. In another mode of operation, changes in the relative position of the robot hand (gripper 30) and the robot arm body are monitored for the purpose of sensing inertial forces or for applying a force to a body of a predetermined magnitude.

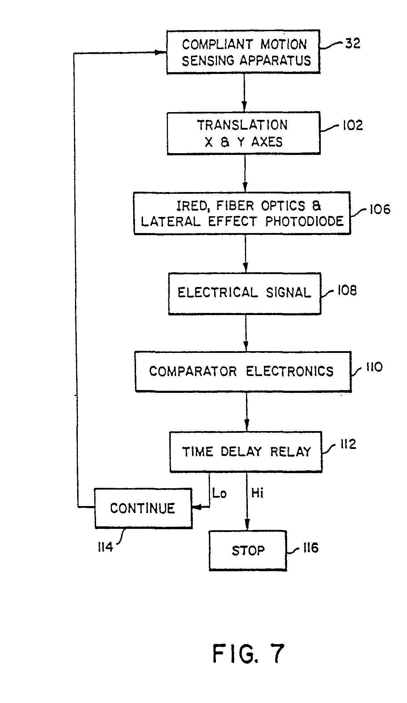

Fig. 7 shows an information flow block diagram of the motion sensing apparatus of the present invention operating in the arm motion interrupting mode. If, for example, the front plate 50 of motion sensing apparatus 32 should be laterally moved or translated in the X and/or Y direction (102) against the tailored or chosen force of compliant pads 52A, 52B, etc., the spot of light from the light emitting diode 60 will move from its initial position on the surface 72 to a position linearly related to the relative movement between the front plate 50 and the back plate 40 on which the photodiode 38 (106) is mounted. This relative movement produces an electrical signal (108) representative of such X and/or Y movement. This signal is compared with predetermined X and Y electrical signal levels (110), and then signal presence in excess of a minimum time duration (112) is determined to filter out false or unwanted mechanical vibrations. If the X or Y signals are less than the predetermined magnitude or are shorter than the predetermined time, the motion sensing apparatus will continue to monitor relative robot hand (gripper) to robot arm body relative movement (114) without interrupting robot arm movement. However, if the X or Y translation signals exceed the predetermined magnitude or duration, compliant motion sensing apparatus 32 causes the motion of the arm to be interrupted (116).

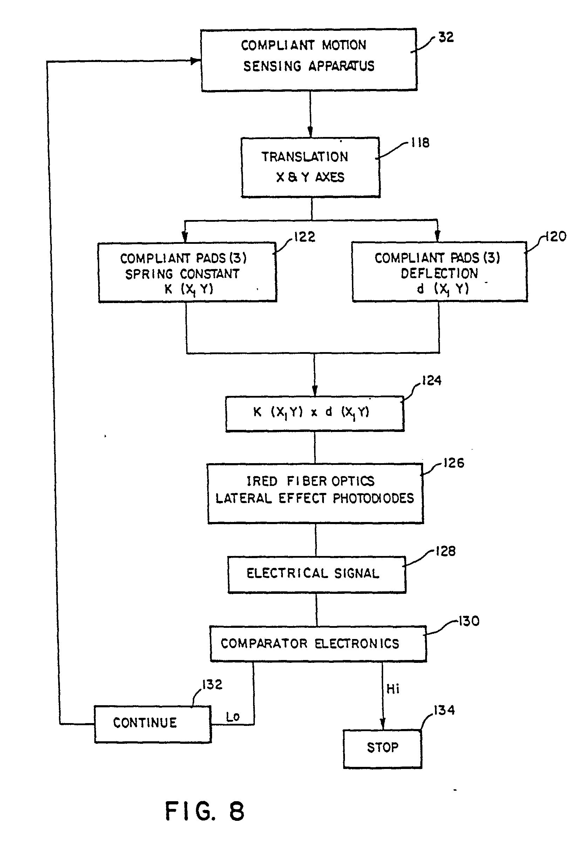

Fig. 8 shows an information flow block diagram of motion sensing apparatus 32 of the present invention operating in the robot arm force providing mode. With reference to Figs. 4A, 4B and 8, if, for example, pin 84 should be brought into contact with a portion of fixedly mounted receiving member 88 by the lateral movement of robot arm assembly 10 (Fig. 1), pin 84 together with front plate 50 of motion sensing apparatus 32 will be laterally displaced or translated in an X and/or Y direction (118) against the tailored or chosen force of compliant pads 52A, 52B, etc. The lateral translation of pin 84 together with front plate 50 of motion sensing apparatus 32 in an X and/or Y direction cause compliant pads 52A, 52B, etc., to laterally deflect a corresponding distance "d" (120). The spring constants K (122) of the pads combine with distance d as a product function (124) as the compliant pads are laterally deflected. As front plate 50 moves laterally, the spot of light from high-intensity infra-red light emitting diode 60 through optical lens 62 falling on photosensitive surface 72 of lateral effect photodiode 38 will move from its initial position on the surface 72 to a position linearly related to the relative movement between front plate 50 and back plate 40 on which the diode 38 is mounted (126). This relative movement produces an electrical signal (128) representative of such X and/or Y movement. The signal is compared with desired X and/or Y electrical signal levels (130) whose magnitude(s) corresponds to a desired predetermined force. Forces that are generated by the robot arm result from robot arm deflection of compliant pads 52A, 52B, etc., having a known spring constant, by a particular distance "d". The deflection of these compliant pads continues (132) until the desired predetermined force is established. Once the force is established, robot arm motion is terminated (134) and the force is maintained.

In addition to the position determining or relative movement sensing and force generating modes described above, motion sensing apparatus 32 can also be employed to determine the null or neutral position of robot hand or gripper 30. By monitoring the current of lateral effect photodiode 32 it is possible to precisely determine the null position which can greatly reduce robot arm programming time.

It will be apparent to those skilled in the art from the foregoing description of the invention that various improvements and modifications can be made in it without departing from its true scope. The embodiments described herein are merely illustrative and should not be viewed as the only embodiments that might encompass the invention.

## Claims

1. Apparatus including a robot arm having a driving input member (42, 40) and a driven output member (50, 30), connecting means extending between and coupling the input and output members to allow resilient relative displacement between the input and output members transverse to the direction of extension of the said connecting means, detector means including a light source (60) and a photosensitive means (38) so arranged in the robot arm that the point of incidence of a beam from the light source on a light-sensitive surface of the photosensitive means varies with the relative displacement of the driving and driven members, characterised in that the photosensitive means is a photodiode (38) with a continuous light-sensitive surface (72) and which is such that in response to light incident at a point on the surface it provides two signals which vary in a continuous manner with the deviation of the point of incidence from a reference point on the surface in two mutually perpendicular directions.

2. Apparatus in accordance with claim 1, in which the connecting means includes at least one elastomeric element (52A) having its ends mounted in fixed relation to respective ones of the driving and driven members (42, 40; 50, 30), each elastomeric element having a relatively high longitudinal spring constant such that relative displacement of the members in the direction of extension of the connecting means between the input and output members is essentially precluded under load forces acting in the said direction, each elastomeric element having a comparatively low lateral spring constant to permit displacement of the portions transverse to the said direction of extension under lighter load forces.

3. Apparatus in accordance with claim 1 or 2, in which the detector means (60, 38) senses the said relative movement of the input and output members so as to determine the load forces acting on the output member in the direction of relative displacement or parallel thereto as a function of the displacement and the resilience of the connecting means.

4. Apparatus according to claim 3, including energizable control means (34) for controlling the displacement of the robot arm in directions parallel to the direction of relative movement, in accordance with displacement of the light spot on the photodetector (72).

5. Apparatus according to claim 4, wherein the control means (34) includes means for terminating further displacement of the robot arm when the displacement of the light spot from its no-load position on the photodetector (72) exceeds a given maximum distance.

6. Apparatus according to claim 4 or 5, comprising means responsive to the relative position signal for disabling the robot arm driving member when the signal is greater than or equal to a predetermined magnitude.

7. Apparatus according to any one of claims 1 to

6, wherein the means for resiliently mounting the driven member on the driving member includes a plurality of compliant pads.

8. Apparatus according to any one of claims 1 to 7, wherein the means for resiliently mounting the driven member on the driving member includes a high-compliance spring comprising a plurality of flat discs, each of the discs having a flat surface adjacent the flat surface of another disc, the disc surfaces being generally orthogonal to an axial direction, the discs being encapsulated in an elastomeric material such that forces applied to the spring lateral to the said axial direction can produce significant disc movement in the said lateral direction and only negligible disc movement in the axial direction.

## Patentansprüche

1. Vorrichtung mit einem Roboterarm, der ein Antriebseingangsglied (42, 40) und ein angetriebenes Abtriebsglied (50, 30) aufweist, mit Verbindungsmitteln zwischen Eingangsglied und Abtriebsglied, die diese beiden Glieder kuppeln und eine elastische Relativversetzung zwischen den Gliedern quer zur Erstreckungsrichtung der Verbindungsmittel ermöglichen, mit einem Detektor, der eine Lichtquelle (60) und eine lichtempfindliche Einrichtung (38) aufweist, die im Roboterarm so angeordnet sind, daß der Lichteinfallspunkt der Lichtquelle auf der lichtempfindlichen Oberfläche der lichtempfindlichen Einrichtung sich mit der Relativversetzung von antreibendem Eingangsglied und angetriebenem Abtriebsglied ändert, dadurch gekennzeichnet, daß die lichtempfindliche Einrichtung eine Fotodiode (38) mit einer kontinuierlichen lichtempfindlichen Oberfläche (72) ist, die derart ausgebildet ist, daß sie gemäß Licht, das an einer Stelle der Oberfläche auftrifft, zwei Signale liefert, die sich kontinuierlich mit der Abweichung des Einfallspunktes von einem Bezugspunkt auf der Oberfläche in zwei senkrecht zueinander stehenden Richtungen ändern.

2. Vorrichtung nach Anspruch 1, bei der die Verbindungsmittel wenigstens ein elastomeres Element (52A) aufweisen, das mit seinem Ende fest an dem antreibenden bzw. angetriebenen Glied (42, 40; 50, 30) montiert ist, wobei jedes elastomere Element eine relativ hohe Längsfederkonstante derart aufweist, daß die Relativversetzung der Glieder in Erstreckungsrichtung der Verbindungsmittel zwischen Eingangs- und Abtriebsglied unter Lastkräften, die in dieser Richtung wirken, im wesentlichen ausgeschlossen ist, wobei jedes elastomere Element eine vergleichsweise kleine seitliche Federkonstante besitzt, um eine Versetzung der Teile quer zur Erstreckungsrichtung unter geringeren Belastungskräften zu ermöglichen.

3. Vorrichtung gemäß Anspruch 1 oder 2, bei welcher der Detektor (60, 38) die Relativbewegung der Eingangs- und Abtriebsglieder feststellt, derart, daß die Lastkräfte bestimmt werden, die auf das Abtriebsglied in Richtung der Relativversetzung oder parallel hierzu wirken, und zwar als Funktion der Versetzung und der Elastizität der Verbindungsmittel.

4. Vorrichtung nach Anspruch 3, mit einer erregbaren Steuervorrichtung (34) zur Steuerung der Versetzung des Roboterarms in Richtungen parallel zur Richtung der Relativbewegung gemäß der Versetzung des Lichtpunktes auf dem Fotodetektor (72).

5. Vorrichtung nach Anspruch 4, bei welcher die Steuervorrichtung (34) Mittel aufweist, um eine weitere Versetzung des Roboterarms zu beenden, wenn die Versetzung des Lichtpunktes von der Stellung ohne Last auf dem Fotodetektor (72) einen gegebenen maximalen Abstand überschreitet.

6. Vorrichtung nach den Ansprüchen 4 oder 5, mit Mitteln, die auf das Relativstellungssignal ansprechen, um das Antriebsglied des Roboterarms unwirksam zu machen, wenn das Signal größer oder gleich einem vorbestimmten Wert ist.

7. Vorrichtung nach einem der Ansprüche 1 bis 6, bei welcher die Mittel zur elastischen Lagerung des angetriebenen Gliedes auf dem antreibenden Glied mehrere elastische Kissen aufweisen.

8. Vorrichtung nach einem der Ansprüche 1 bis 7, bei welcher die Mittel zur elastischen Lagerung des angetriebenen Gliedes auf dem antreibenden Glied einer Feder hoher Nachgiebigkeit aufweisen, welche aus mehreren flachen Scheiben besteht, von denen jede eine flache Oberfläche benachbart zur flachen Oberfläche einer weiteren Scheibe aufweist, wobei die Scheibenoberflächen allgemein senkrecht zu einer Axialrichtung liegen und die Scheiben in einem elastomeren Material derart eingekapselt sind, daß Kräfte, die auf die Feder seitlich zur Axialrichtung ausgeübt werden, eine beträchtliche Scheibenbewegung in der seitlichen Richtung und nur eine vernachlässigbare Scheibenbewegung in Axialrichtung bewirken.

## Revendications

1. Appareil comprenant un bras de robot comportant un élément d'entrée d'entraînement (42, 40) et un élément de sortie entraîné (50, 30), et un moyen de liaison s'étendant entre et accouplant les éléments d'entrée et de sortie pour permettre un déplacement élastique relatif entre les éléments d'entrée et de sortie perpendiculairement à la direction d'orientation dudit moyen de liaison, un moyen détecteur comprenant une source lumineuse (60) et un moyen photosensible (38) agencé de telle façon dans le bras de robot que le point d'incidence d'un faisceau provenant de la source lumineuse et arrivant sur une surface sensible à la lumière du moyen photosensible varie avec le déplacement relatif des éléments d'entraînement et entraînés, caractérisé par le fait que le moyen photosensible est une photodiode (38) ayant une surface continue (72) sensible à la lumière et qui est telle qu'en réponse à la lumière arrivant en un point de la surface, elle délivre deux signaux qui varient d'une manière continue avec l'écart du point d'incidence par rapport à un point de référence de la surface dans deux directions perpendiculaires entre elles.

2. Appareil selon la revendication 1, dans lequel le moyen de liaison comprend au moins un élément en élastomère (52A) ayant ses extrémités reliées de manière fixe aux extrémités respectives des éléments d'entraînement et entraînés (42, 40; 50, 30), chaque élément en élastomère ayant une constante de rappel longitudinal relativement élevée telle que le déplacement relatif des éléments dans la direction d'orientation du moyen de liaison entre les éléments d'entrée et de sortie soit essentiellement empêché sous l'effet des forces de charge agissant dans ladite direction, chaque élément en élastomère ayant une constante de rappel latéral relativement faible pour permettre le déplacement des portions perpendiculairement à ladite direction d'orientation sous l'effet de forces de charge plus faibles.

3. Appareil selon l'une des revendications 1 ou 2, dans lequel le moyen détecteur (60, 38) détecte ledit mouvement relatif entre les éléments d'entrée et de sortie de façon à déterminer les forces de charge agissant sur l'élément de sortie dans la direction du déplacement relatif ou parallèlement à cette direction en fonction du déplacement et de l'élasticité du moyen de liaison.

4. Appareil selon la revendication 3, comprenant un moyen de commande (34) susceptible d'être excité pour commander le déplacement du bras de robot dans des directions parallèles à la direction du mouvement relatif, en fonction du déplacement du spot lumineux sur le photodétecteur (72).

5. Appareil selon la revendication 4, dans lequel le moyen de commande (34) comprend un moyen pour terminer tout déplacement supplémentaire du bras de robot lorsque le déplacement du spot lumineux par rapport à sa position à vide sur le photodétecteur (72) dépasse une distance maximale donnée.

6. Appareil selon l'une des revendications 4 ou 5, comprenant un moyen qui répond au signal de position relative pour mettre hors fonction l'élément d'entraînement du bras de repos lorsque le signal est supérieur ou égal à une amplitude prédéterminée.

7. Appareil selon l'une des revendications 1 à 6, dans lequel le moyen de montage élastique de l'élément entraîné sur l'élément d'entraînement comprend une pluralité de blocs élastiques.

8. Appareil selon l'une quelconque des revendications 1 à 7, dans lequel le moyen de montage élastique de l'élément entraîné sur l'élément d'entraînement comprend une ressort de grande élasticité, constitué par une pluralité de disques plats, chacun des disques ayant une surface plane en contact avec la surface plane d'un autre disque, les surfaces de disques étant généralement perpendiculaires à une direction axiale, les disques étant enrobés dans un matériau élastomère, de telle sorte que des forces appliquées sur le ressort latéralement par rapport à ladite direction axiale, puissent entraîner un mouvement significatif des disques dans ladite direction latérale et seulement un mouvement négligeable des disques dans la direction axiale.

FIG. I

FIG. 2

0 125 775

FIG. 3A

FIG. 3B

FIG. 4A

FIG. 4B

FIG. 5A

FIG. 5B

FIG. 6A

FIG. 6B

4

```
          ┌─────────────────────┐
          │ COMPLIANT MOTION    │─ 32
          │ SENSING APPARATUS   │
          └─────────────────────┘
                    │
                    ▼
          ┌─────────────────────┐
          │ TRANSLATION         │─ 102
          │ X & Y AXES          │
          └─────────────────────┘
                    │
                    ▼
        ┌────────────────────────────┐
        │ IRED, FIBER OPTICS &       │─ 106
        │ LATERAL EFFECT PHOTODIODE  │
        └────────────────────────────┘
                    │
                    ▼
          ┌─────────────────────┐
          │ ELECTRICAL SIGNAL   │─ 108
          └─────────────────────┘
                    │
                    ▼
        ┌────────────────────────────┐
        │ COMPARATOR ELECTRONICS     │─ 110
        └────────────────────────────┘
                    │
                    ▼
          ┌─────────────────────┐
          │ TIME DELAY RELAY    │─ 112
          └─────────────────────┘
                 Lo │ Hi
     ┌──────────┐   │   │
     │ CONTINUE │◄──┘   │
     └──────────┘       ▼
        114        ┌─────────┐
                   │  STOP   │─ 116
                   └─────────┘
```

FIG. 7

FIG. 8